Europäisches Patentamt

European Patent Office

Office européen des brevets

(19)

(11) Veröffentlichungsnummer: **0 161 520**
**B1**

(12) **EUROPÄISCHE PATENTSCHRIFT**

(45) Veröffentlichungstag der Patentschrift:
16.09.87

(51) Int. Cl.⁴: **B 01 D 53/34**

(21) Anmeldenummer: **85104666.4**

(22) Anmeldetag: **17.04.85**

(54) Verfahren und Vorrichtung zum Entschwefeln von Rauchgasen.

(30) Priorität: **26.04.84 DE 3415541**

(43) Veröffentlichungstag der Anmeldung:
**21.11.85 Patentblatt 85/47**

(45) Bekanntmachung des Hinweises auf die Patenterteilung:
**16.09.87 Patentblatt 87/38**

(84) Benannte Vertragsstaaten:
**AT BE CH DE FR GB IT LI LU NL SE**

(56) Entgegenhaltungen:
**DE - A - 3 312 388**
**FR - A - 2 206 118**
**FR - A - 2 526 671**

(73) Patentinhaber: **Deutsche Babcock Anlagen
Aktiengesellschaft, Duisburger Strasse 375,
D-4200 Oberhausen 1 (DE)**

(72) Erfinder: **Fahlenkamp, Hans, Dr., Wolferstrasse 4,
D-4150 Krefeld (DE)**
Erfinder: **Wolf, Hubert, Dompfaffweg 1,
D-4005 Meerbusch (DE)**

(74) Vertreter: **Planker, Karl-Josef, Dipl.-Phys., c/o Deutsche
Babcock Anlagen AG Parkstrasse 29 Postfach 4 + 6,
D-4150 Krefeld 11 (DE)**

ACTORUM AG

# Beschreibung

Die Erfindung betrifft ein Verfahren zum Entschwefeln von Rauchgasen, insbesondere aus Kraftwerksfeuerungen, gemäss dem Oberbegriff des Patentanspruchs 1 und eine Vorrichtung zur Durchführung des Verfahrens gemäss dem Oberbegriff des Patentanspruchs 5.

Bei der Entschwefelung von Rauchgasen, insbesondere aus Kraftwerksfeuerungen, erreicht man durch Nasswäsche mit einem neutralisierenden Absorptionsmittel besonders hohe Abscheidegrade. Die Verwendung von Kalk- und/oder Kalksteinsuspension als Absorptionsmittel führt dabei zu Gips als Endprodukt.

Um ausschliesslich den gut entwässerbaren und weiter verwertbaren Gips (Calciumsulfat-Dihydrat) als Endprodukt zu erhalten, muss das als Zwischenprodukt entstehende Calciumsulfit und -bisulfit zu Sulfat oxidiert werden. Dazu reicht der bei Kraftwerksfeuerungen im Rauchgas verbliebene Sauerstoff nicht aus, es muss Sauerstoff zugeführt werden. Dies erfolgt üblicherweise durch Einblasen von Luft in den Nasswäscher.

Der Nasswäscher ist üblicherweise ein aufrechtstehender Waschturm, durch den das Rauchgas von unten nach oben durchgeleitet wird. Das Verteilsystem für die Waschflüssigkeit — z.B. Düsen, Rieselflächen — befindet sich im oberen Teil, so dass das Rauchgas im Gegenstrom gewaschen wird. Der untere Teil des Waschturms ist als Sumpf- und Vorlagebehälter ausgebildet, aus dem die Waschflüssigkeit abgezogen und zum Verteilsystem zurückgepumpt wird, d.h. die Waschflüssigkeit wird dauernd umgewälzt. Aus dem Sumpf wird abgesetzter Schlamm abgezogen und durch neue Absorptionsmittelsuspension ersetzt.

Es ist bekannt, den zur Oxidation benötigten Sauerstoff einzubringen, indem man Luft in den Sumpf einbläst. Ein derartiges Verfahren und eine derartige Vorrichtung sind in der DE-A-3 139 991 beschrieben.

Bei diesem Verfahren wirkt sich nachteilig aus, dass die Oxidation des Sulfits und Bisulfits zu Sulfat optimal bei einem pH-Wert von weniger als 4,5 abläuft, mit steigendem pH-Wert nimmt die Oxidationsgeschwindigkeit rapide ab. Allerdings ist bei einem pH-Wert unterhalb von 5,5 der $SO_2$-Abscheidegrad unwirtschaftlich niedrig, daher wird durch Zugabe von basischem Absorptionsmaterial in den Sumpf der pH-Wert der Waschflüssigkeit auf einen Wert zwischen 5,5 und 6 eingestellt. Unter diesen Umständen ist es schwierig, eine ausreichende Oxidation zu gewährleisten, dazu bedarf es eines grossen apparativen Aufwandes, um genügend Sauerstoff in Lösung zu bringen.

In der DE-A-3 218 470 wird ein gattungsgemässes Verfahren und eine gattungsgemässe Vorrichtung beschrieben. Dort wird das Problem der gegensätzlichen Anforderungen an den pH-Wert für Absorption und Oxidation gelöst, indem der Flüssigkeitssumpf geschichtet wird: in eine Oxidationsstufe und eine untere Reaktionsstufe, wo die Absorptionsmittelzugabe und die Ausfällung des Gipses erfolgt. Erreicht wird diese Schichtung durch einen horizontalen Rost von Sauerstoffzuführungsleitungen, die nach oben weisende Austrittsöffnungen haben. Dieser Lösung haftet als Nachteil an, dass der Einsatz von Rührwerken im Sumpf erschwert und behindert ist. Bei Verwendung einer Suspension als Waschflüssigkeit ist es erfahrungsgemäss für einen wirkungsvollen Betrieb erforderlich, den Sumpf zu rühren; u.a. um das Absorptionsmittel in angemessenen Raten in Lösung zu bringen. Ebenso ist ohne Rühren des Sumpfes verstärkt mit Störungen als Folge von Ablagerungen zu rechnen, insbesondere bei Stillstand der Anlage.

Der Erfindung liegt die Aufgabe zugrunde, ein Verfahren zur Entschwefelung von Rauchgasen gemäss dem Oberbegriff des Patentanspruchs 1 zu schaffen, das eine hohe Oxidationsrate bei geringem apparativem Aufwand ermöglicht, wobei gleichzeitig ausreichend schwer lösliches Absorptionsmittel in Lösung gebracht werden kann. Eine weitere Aufgabe besteht in der Bereitstellung einer Vorrichtung zur Durchführung des erfindungsgemässen Verfahrens.

Die erste Aufgabe wird durch das kennzeichnende Merkmal des Patentanspruchs 1 gelöst. Es hat sich überraschenderweise gezeigt, dass trotz der geringen Verweilzeit, die der Sauerstoff während der Rückführung in der Waschflüssigkeit hat, und trotz des hohen pH-Wertes, den diese währenddessen aufweist, eine ausreichende Oxidation des Sulfits und Bisulfits stattfindet.

Bei dem Verfahren gemäss Anspruch 2 wird der Sauerstoff an der Stelle zugeführt, an der die Waschflüssigkeit die grösste Aufnahmefähigkeit aufweist. Durch Zuführen des Sauerstoffs während der Druckerhöhung — z.B. in der Saugseite der Umwälz-Pumpe — ist es möglich, die erforderliche Kompressorleistung zu verringern.

Die zweite Aufgabe wird durch das kennzeichnende Merkmal des Anspruchs 5 gelöst.

Die Vorrichtung gemäss Anspruch 6 ist eine bevorzugte Ausführungsform zur Durchführung eines Verfahrens nach Patentanspruch 2.

Die Erfindung hat den weiteren Vorteil, dass sich der Sauerstoff bzw. die Luft in eine Flüssigkeit, die eine Leitung durchströmt, mit geringem apparativem Aufwand besser einmischen lässt, als in eine Flüssigkeit, die sich in einem grossvolumigen Behälter in Ruhe bzw. bei nur geringer Strömung befindet. Bei der Vorrichtung nach Anspruch 7 wird diese Tatsache auf besonders vorteilhafte Weise genutzt.

Das Entlüftungssystem nach Anspruch 8 sichert die Funktionsfähigkeit des Verteilsystems für die Waschflüssigkeit bei überschüssiger Gaszufuhr.

Die Vorrichtungen nach den Ansprüchen 9-11 sind bevorzugte Ausführungsformen der Erfindung. Sie ermöglichen die stufenweise Anpassung des Waschflüssigkeitsstroms und der Sauerstoffzufuhr auf unterschiedlichen Schadstoffanfall, wie er z.B. durch Lastschwankungen des vorgeschalteten Kessels oder durch Verfeuerung von Kohle mit unterschiedlicher Schwefelkonzentration auftritt.

Bei der Vorrichtung nach Anspruch 11 verringert sich der apparative und energetische Aufwand erheblich, da nur etwa ein Fünftel des Gasstromes — im Vergleich mit Luft — in die Waschflüssigkeit eingebracht werden muss.

Die Zeichnungen dienen zur Erläuterung der Erfindung anhand vereinfacht dargestellter Ausführungsbeispiele.

Fig. 1 zeigt grob-schematisch eine Ausführungsform gemäss Anspruch 10.

Fig. 2 zeigt grob-schematisch eine Ausführungsform gemäss Anspruch 11.

Fig. 3 zeigt grob-schematisch eine Ausführungsform gemäss Anspruch 10 mit einem veränderten Entlüftungssystem.

Die erfindungsgemässe Vorrichtung zum Entschwefeln von Rauchgasen besteht aus einem senkrecht stehenden Waschturm 1, dessen unterer Teil als Behälter für den Sumpf 2 ausgebildet ist und so gleichzeitig als Vorlagebehälter für die umgewälzte Waschflüssigkeit dient. Dort befinden sich ebenfalls eine Zuleitung 3 für das Absorptionsmittel — im vorliegenden Beispiel Kalkstein — und eine Ableitung 4, über die Waschflüssigkeit mit dem gebildeten Gips abgezogen wird. Ein Rührer 5 reicht in den Sumpf 2.

Kurz oberhalb des Sumpfes 2 mündet ein Rauchgaseintritt 6. Am oberen Ende des Waschturms 1 befindet sich ein Reingasaustritt 7 mit einem Tropfenabscheider 8. Zwischen Rauchgaseintritt 6 und Reingasaustritt 7 ist im Waschturm 1 ein Verteilsystem 9 für die Waschflüssigkeit angebracht, im vorliegenden Beispiel sind es fünf waagrechte, übereinander angeordnete Düsenebenen 9.1-9.5; ebenso kann die Verteilung über Rohre, gegebenenfalls mit nachgeschalteten Kontaktflächen erfolgen. Jede Düsenebene 9.1-9.5 ist über eine Rückführleitung — hier eine Steigleitung 10.1-10.5 — mit einer Umwälzpumpe 11.1-11.5 mit dem Sumpf 2 verbunden. Unmittelbar hinter den Umwälzpumpen 11 sind an den Steigleitungen 10 Gaszuführleitungen 12.1-12.5, jeweils mit Rückschlagklappen und Motorventilen 13.1-13.5, angeschlossen, die in den jeweiligen Steigleitungen 10 mit einem nicht dargestellten Gasverteilungssystem enden. Dieses Gasverteilungssystem besteht vorzugsweise aus einem Strahlapparat (z.B. Injektor); Düsen, Lochbleche, Hohlschalen etc. sind ebenfalls einsetzbar.

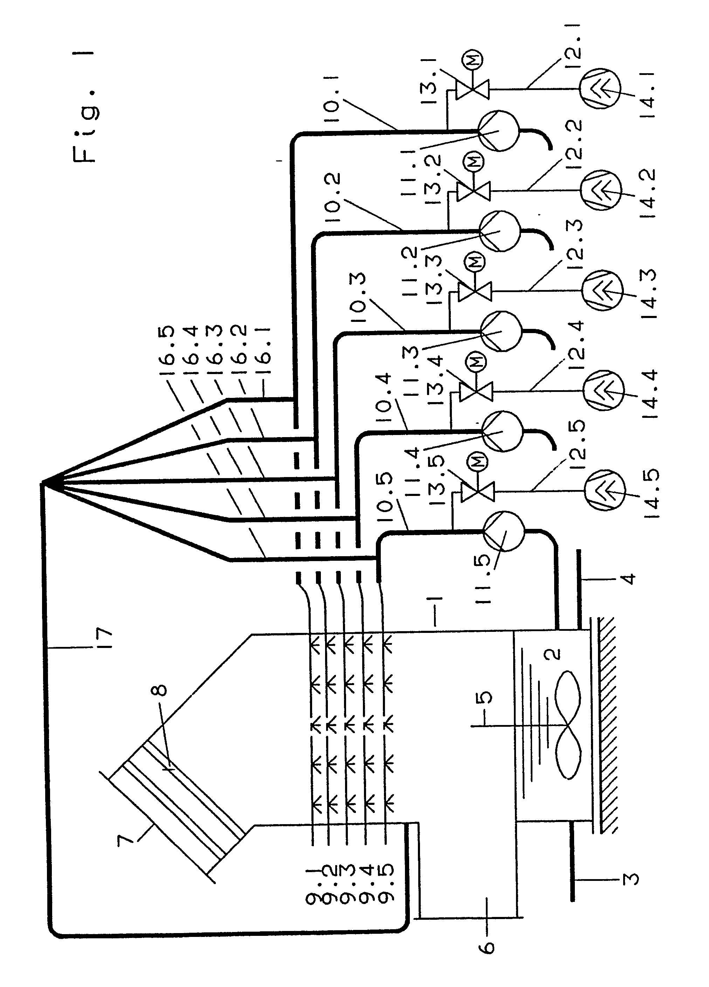

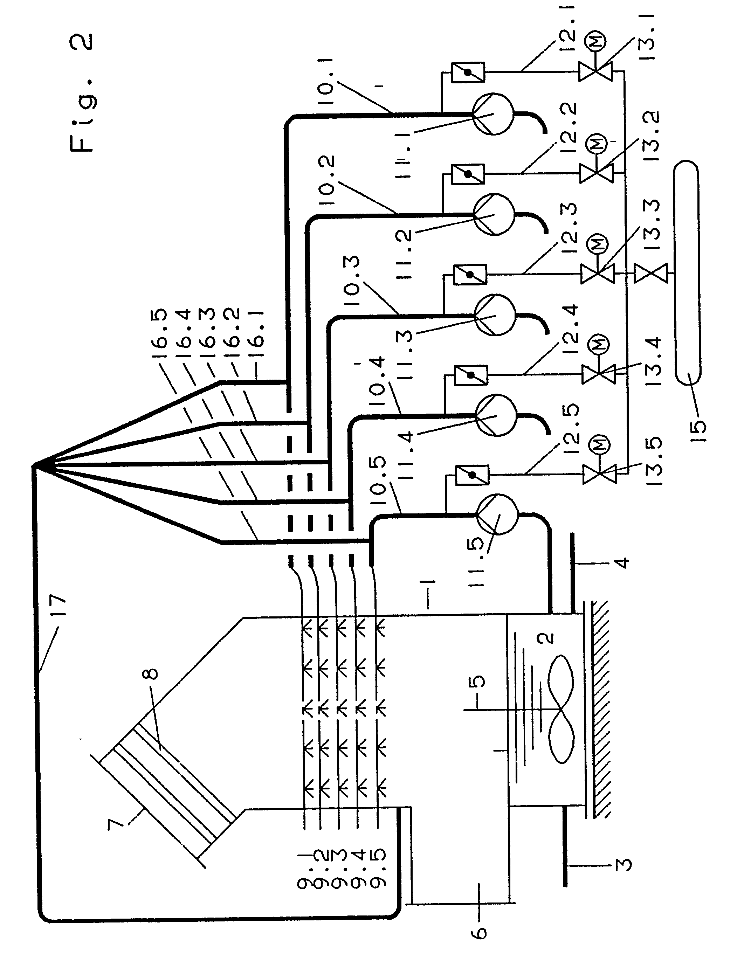

In der Ausführungsform nach Fig. 1 wird jede Gaszuführleitung 12 über einen Kompressor 14.1-14.5 mit Luft versorgt. Bei der Ausführungsform nach Fig. 2 erfolgt die Versorgung mit reinem Sauerstoff über einen gemeinsamen Drucktank 15.

Bei einer anderen, nicht dargestellten Ausführungsform der Erfindung enden die Gaszuführleitungen 12.1-12.5 jeweils in den Saugseiten der Umwälzpumpen 11.1-11.5. Diese übernehmen so einen Teil der Kompressionsarbeit der Kompressoren 14.1-14.5, wodurch diese auf kleinere Leistung ausgelegt werden können.

Am höchsten Punkt jeder Steigleitung 10.1-10.5 — er befindet sich oberhalb der zugehörigen Düsenebene 9.1-9.5 — ist eine senkrecht nach oben führende Entlüftungsleitung 16.1-16.5 angeschlossen, die in einem gemeinsamen Sammler 17 für überschüssiges Gas endet. Letzterer führt unterhalb der Düsenebenen 9 in den Waschturm 1 zurück.

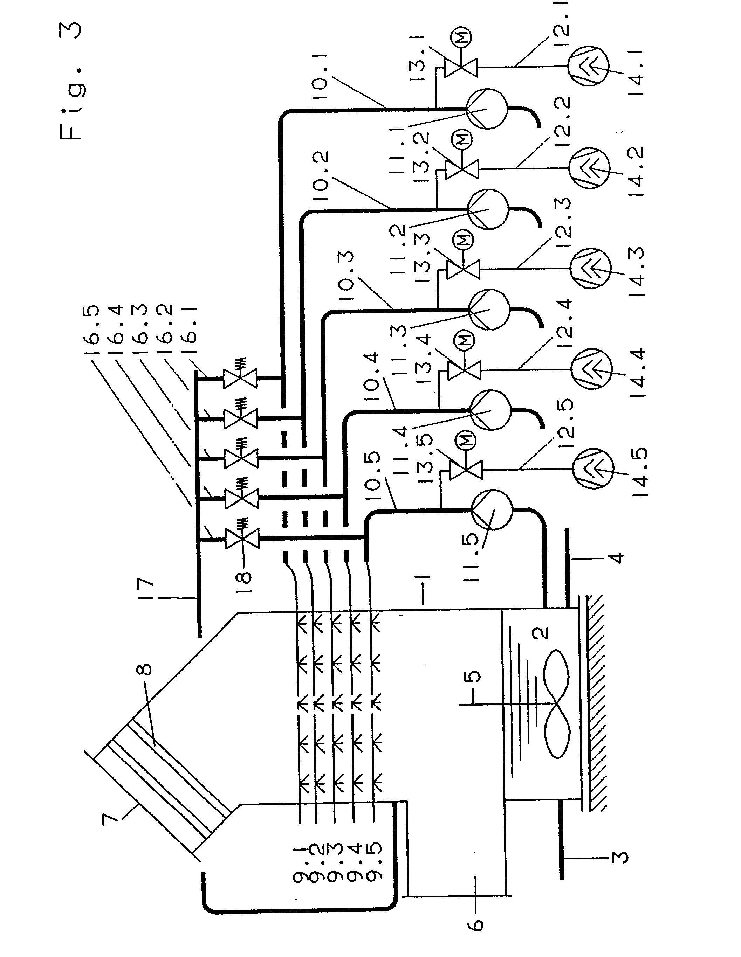

Nach einer Ausführungsform der Erfindung (Fig. 1, Fig. 2) ist die Höhe jeder Entlüftungsleitung 16 so bemessen, dass durch Aufsteigen der Waschflüssigkeit der Druckabfall in den Düsenebenen 9 ausgeglichen werden kann, ohne dass Waschflüssigkeit in den Sammler 17 eintritt. In der Ausführungsform nach Fig. 3 ist jede Entlüftungsleitung 16 zur Aufrechterhaltung des für die Düsenebenen 9 notwendigen Druckes mit einem Druckhalteventil 18 versehen.

Bei der Durchführung des erfindungsgemässen Verfahrens werden die schwefelhaltigen Rauchgase im Waschturm 1 im Gegentrom mit umgewälzter Waschflüssigkeit gewaschen. Dazu wird die Waschflüssigkeit von den Umwälzpumpen 11 über die Steigleitungen 10 zu den Düsenebenen 9 umgepumpt und von diesen versprüht. Um den pH-Wert der Waschflüssigkeit konstant — z.B. auf pH = 5,8 — zu halten, wird in den Sumpf 2 entsprechend frische Kalksteinsuspension über die Zuleitung 3 eingepumpt. Die Grösse des Sumpfes, und damit die Vorlage an Waschflüssigkeit ist so bemessen, dass jederzeit ausreichend gelöster Kalkstein vorliegt. Der Lösungsvorgang wird durch Rühren mit dem zentralen Rührer 5 unterstützt. Gleichzeitig wird über die Leitung 4 Waschflüssigkeit abgezogen. Sie wird, nachdem aus ihr der Gips entfernt wurde, zum Waschturm 1 zurückgeführt.

Nach der Erfindung wird der zur Oxidation benötigte Sauerstoff der Waschflüssigkeit zugeführt, während sie unter erhöhtem Druck stehend zu den Düsenebenen 9 zurückgeführt wird. Im Ausführungsbeispiel nach Fig. 1 saugen die Kompressoren 14 Luft an und pressen sie in die Steigleitungen 10.

Nach einer anderen Variante des Verfahrens wird reiner Sauerstoff aus einem Drucktank 15 — gegebenenfalls nach einer Druckminderung — in die Waschflüssigkeit eingemischt. Bei dieser Variante wird nicht nur der Sauerstoff in fünffacher Konzentration eingebracht, was den Lösungsvorgang vorteilhaft beeinflusst, sie ermöglicht auch eine einfachere Technik: die Kompressoren 14 sind überflüssig, gleichzeitig, ermöglicht die wesentlich geringere Menge an Überschussgas eine einfachere Entlüftungstechnik.

Sowohl Luft als auch reiner Sauerstoff werden bevorzugt mit Hilfe von Strahlapparaten, z.B. Injektoren, in die Steigleitungen 10 eingemischt, wodurch eine optimal schnelle Verteilung in der Waschflüssigkeit gewährleistet ist.

Der unter erhöhtem Druck in die Steigleitungen 10 eingemischte Sauerstoff führt zu einer spontanen Oxidation des in der Waschflüssigkeit vorhandenen Kalzuimsulfits und -bisultits zu Kalziumsulfat. Darüber hinaus löst sich dem Druck entsprechend weiterer Sauerstoff in der Waschflüssigkeit. Obwohl die Menge des gelösten Sauerstoffs durch Druckabfall beim Aufstieg in den Steigleitungen 10 durch Ausgasen wieder abstimmt, zeigte es sich, dass die in Lösung verbliebene Restmenge eine vollständige Oxidation des im Waschturm 1 gebildeten Sulfits und Bisulfits gewährleistet.

Das Überschussgas, das beim Druckabfall in den Steigleitungen 10 ausgast, tritt über die Entlüftungsleitungen 16 in den Sammler 17 ein und wird in den Waschturm 1 zurückgeführt. Auf diese Weise wird in der Waschflüssigkeit gelöstes und mit ausgegastes Schwefeldioxid — z.B. in Folge eines zeitweisen Mangels an gelöstem Absorptionsmittel — ebenfalls in den Waschturm zurückgeleitet. In den Entlüftungsleitungen 16 wird die Waschflüssigkeit auf eine dem Druckabfall in den Düsenebenen 9 entsprechende Höhe gedrückt, so wird die Funktionsfähigkeit des Verteilsystems 9 für die Waschflüssigkeit bei optimaler Sauerstoffsättigung sichergestellt.

In dem Ausführungsbeispiel nach Fig. 3 wird diese Funktion der Waschflüssigkeitssäulen von den Druckhalteventilen 18 übernommen, die den entsprechenden Druck für die Düsenebenen 9 aufrechterhalten. Neben dem geringen Leitungsaufwand hat diese Ausführungsform den Vorteil, dass durch den hohen Gegendruck das Ausgasen des Überschussgases nicht so eruptiv erfolgt.

Je nach Anwendungsfall kann es möglich sein, das Überschussgas ohne ein gesondertes Entlüftungssystem einfach mit der Waschflüssigkeit über das Verteilsystem 9 in den Waschturm 1 einzublasen, ohne dass eine Beeinträchtigung der Waschflüssigkeitsverteilung auftritt. Diese Möglichkeit besteht insbesondere bei Verwendung von reinem Sauerstoff, da sich dort die Überschussgasmenge — verglichen mit der Zuführung von Luft — auf ein Fünftel reduziert.

Der umgewälzte Waschflüssigkeitsstrom lässt sich durch Zu- und Abschalten einzelner Umwälzpumpen 11.1-11.5 stufenweise regulieren. So ist es möglich z.B. bei Schwachlast im vorgeschalteten Kessel oder bei der Verfeuerung schwefelarmer Kohle die Betriebskosten erheblich zu senken. Gleichfalls lässt sich die Sauerstoffzufuhr zu jeder Steigleitung 10.1-10.5 mit den Motorventilen 13.1-13.5 zu- und abschalten. Im Gegensatz zum bekannten Stand der Technik brauchen dann keine Massnahmen ergriffen zu werden, um die Gaszuführungsleitungen freizuhalten.

## Patentansprüche

1. Verfahren zum Entschwefeln von Rauchgasen durch Waschen mit einer umgewälzten Kalk- und/oder Kalksteinsuspension, bei dem das gebildete Sulfit und Bisulfit unter Zugabe von Sauerstoff zu Sulfat oxidiert wird, dadurch gekennzeichnet, dass der Sauerstoff der Waschflüssigkeit zugegeben wird, während sie unter erhöhtem Druck zurückgeführt wird.

2. Verfahren nach Anspruch 1, dadurch gekennzeichnet, dass der Sauerstoff während oder unmittelbar nach der Druckerhöhung zugeführt wird.

3. Verfahren nach Anspruch 1 oder 2, dadurch gekennzeichnet, dass der Sauerstoff durch Einblasen von Luft zugeführt wird.

4. Verfahren nach Anspruch 1 oder 2, gekennzeichnet durch die Zuführung von reinem Sauerstoff.

5. Vorrichtung zur Durchführung des Verfahrens nach Patentanspruch 1-4, bestehend aus einem Waschturm (1)
— mit einem Behälter für den Sumpf (2),
— mit einer Zuleitung (3) für eine Kalk- und/oder Kalksteinsuspension in den Sumpf (2),
— mit einem Rauchgaseintritt (6) und einem Reingasaustritt (7) zwischen denen ein Verteilsystem (9) für die Waschflüssigkeit angeordnet ist, und
— mit einer Rückführleitung (10) mit Umwälzpumpe (11), die den Sumpf (2) mit dem Verteilsystem (9) verbindet,
gekennzeichnet durch eine Einrichtung zum Zuführen von Sauerstoff in die Umwälzpumpe (11) oder in die Rückführleitung (10) zwischen der Umwälzpumpe (11) und dem Verteilsystem (9) für die Waschflüssigkeit.

6. Vorrichtung nach Anspruch 5, gekennzeichnet durch eine Einrichtung, die den Sauerstoff unmittelbar hinter der Umwälzpumpe (11) in die Rückführleitung (10) einleitet.

7. Vorrichtung nach Anspruch 5 und 6, gekennzeichnet durch einen Strahlapparat zur Verteilung des Sauerstoffs in der Rückführleitung (10).

8. Vorrichtung nach einem der Ansprüche 5-7, gekennzeichnet durch ein Entlüftungssystem (16, 17, 18) für die Rückführleitung (10).

9. Vorrichtung nach einem der Ansprüche 5-8, mit einem senkrecht stehenden Waschturm (1) mit einem oder mehreren übereinander angeordneten Systemen (9.1-9.5) zur Verteilung der Waschflüssigkeit, die über Steigleitungen 10.1-10.5 mit Umwälzpumpen (11.1-11.5) mit dem Sumpf (2) verbunden sind, dadurch gekennzeichnet, dass jede Steigleitung (10.1-10.5) eine Einrichtung zum Zuführen von Sauerstoff aufweist.

10. Vorrichtung nach Anspruch 9, gekennzeichnet durch mindestens einen Luftkompressor (14), der über Gaszuführleitungen (12.1-12.5) an den Steigleitungen (10.1-10.5) angeschlossen ist.

11. Vorrichtung nach Anspruch 9, gekennzeichnet durch einen Drucktank (15) mit reinem Sauerstoff, an den die Steigleitungen (10.1-10.5) über Gaszuführungsleitungen (12.1-12.5) angeschlossen sind.

## Claims

1. Process for the desulphurization of flue gases by scrubbing with a recirculated lime and/or limestone suspension, in which the sulphite and bisulphite formed are oxidized to sulphate by the addition of oxygen, characterized by the fact that the oxygen is added to the scrubbing liquid while it is returned at an increased pressure.

2. Processes according to claim 1, characterized by the fact that the oxygen is added during or immediately after pressure increase.

3. Processes according to claims 1 or 2, characterized by the fact that the oxygen is introduced by the injection of air.

4. Processes according to claims 1 or 2, characterized by the addition of pure oxygen.

5. Appatus for carrying out the process according to patent claims 1 to 4, consisting of one scrubbing tower (1)
— with a tank for the sump (2),
— with a suppy line (3) for a lime and/or limestone suspension into the sump (2),
— with a flue gas inlet (6) and a clean gas outlet (7) between which a distribution system (9) for the scrubbing liquid is arranged and
— with a return line (10) with recirculation pump (11), which connects the sump (2) to the distribution system (9),
characterized by a facility for the supply of oxygen into the recirculation pump (11) or into the return line (10) between the recirculation pump (11) and the distribution system (9) for the scrubbing liquid.

6. Apparatus according to claim 5, characterized by a device which introduces the oxygen into the return line (10) immediately after the recirculation pump (11).

7. Apparatus according to claims 5 or 6, characterized by an injector to distribute the oxygen in the return line (10).

8. Apparatus according to one of the claims 5-7, characterized by a ventilation system (16, 17 , 18) for the return line (10).

9. Apparatus according to one of the claims 5-8 with a vertically arranged scrubbing tower (1) with one or more systems arranged one above the other (9.1-9.5) for the distribution of the scrubbing liquid, which are connected via riser tubes (10.1-10.5) with recirculation pumps (11.1-11.5) with the sump (2), characterized by the fact that each riser tube (10.1-10.5) has a device for feeding oxygen.

10 Apparatus according to claim 9, characterized by at least one air compressor (14) which is connected via gas supply lines (12.1-12.5) to the riser tubes (10.1-10.5).

11. Apparatus according to claim 9 characterized by a pressure tank (15) with pure oxygen to which the riser tubes (10.1-10.5) are connected via gas supply lines (12.1-12.5).

**Revendications**

1. Procédé pour la désulfuration de gaz de fumée par lavage avec une suspension de chaux et/ou de calcaire en circulation; le sulfite et le bisulfite formés se transforment en sulfate par apport d'oxygène, caractérisé par le fait que l'oxygène est additionné au liquide de lavage pendant la recirculation sous pression augmentée.

2. Procédé selon la revendication 1, caractérisé par le fait que l'oxygène est additionné pendant ou immédiatement après l'augmentation de pression.

3. Procédé selon l'une des revendications 1 ou 2, caractérisé par le fait que l'oxygène est additionné par injection d'air.

4. Procédé selon l'une des revendications 1 ou 2, caractérisé par le fait de l'apport d'oxygène pur.

5. Dispositif pour la réalisation du procédé selon les revendications 1-4, comprenant une tour de lavage (1) avec
— un bac pour le puisard (2),
— une conduite (3) pour l'amenée d'une suspension de chaux et/ou de calcaire dans le puisard (2),
— une entrée de fumée (6) et une sortie de gaz purifié (7) entre lesquelles est disposé un système de distribution (9) du liquide de lavage,
— une conduite de recirculation (10) avec pompe de circulation (11) reliant le puisard (2) au système de distribution (9),
caractérisé par un dispositif d'introduction d'oxygène dans la pompe de circulation (11) ou dans la conduite de recirculation (10) situé entre la pompe de recirculation (11) et le système de distribution (9).

6. Dispositif selon la revendication 5, caractérisé par un système qui introduit l'oxygène immédiatement en aval de la pompe de circulation (11) dans la conduite de recirculation (10).

7. Dispositif selon l'une des revendications 5 ou 6, caractérisé par un appareil à jet pour la distribution de l'oxygène dans la conduite de recirculation (10).

8. Dispositif selon l'une des revendications 5-7, caractérisé par un système de désaérage (16, 17, 18) de la conduite de recirculation (10).

9. Dispositif selon l'une des revendications 5-8 avec une tour de lavage verticale (1) comprenant un ou plusieurs systèmes (9.1-9.5) disposés l'un au-dessus de l'autre pour la distribution du liquide de lavage, reliés par des conduites ascendantes (10.1-10.5) comprenant des pompes de circulation (11.1-11.5) au puisard (2), caractérisé par le fait que chaque conduite ascendante (10.1-10.5) comprend un dispositif pour l'introduction de l'oxygène.

10. Dispositif selon la revendication 9, caractérisé par au moins un compresseur d'air (14) qui est relié par des conduites d'amenée de gaz (12.1-12.5) aux conduites ascendantes (10.1-10.5).

11. Dispositif selon la revendication 9, caractérisé par un ballon d'air comprimé (15) contenant de l'oxygène pur auquel sont reliées les conduites ascendantes (10.1-10.5) par des conduites d'amenée de gaz (12.1-12.5).

Fig. 1

Fig. 2

Fig. 3